(19) **Europäisches Patentamt / European Patent Office / Office européen des brevets**

(11) **EP 1 397 630 B1**

(12) **EUROPEAN PATENT SPECIFICATION**

(45) Date of publication and mention
of the grant of the patent:
**16.01.2008 Bulletin 2008/03**

(21) Application number: **01995230.8**

(22) Date of filing: **27.11.2001**

(51) Int Cl.:
*F26B 19/00* (2006.01)   *G02B 6/245* (2006.01)
*F24H 3/04* (2006.01)

(86) International application number:
**PCT/US2001/044189**

(87) International publication number:
**WO 2002/044794 (06.06.2002 Gazette 2002/23)**

(54) **HIGH EFFICIENCY HEATER AND STRIPPER**

HOCHEFFIZIENTES HEIZELEMENT UND ABMANTELUNGSVORRICHTUNG

ELEMENT CHAUFFANT ET SEPARATEUR A RENDEMENT ELEVE

(84) Designated Contracting States:
**AT BE CH CY DE DK ES FI FR GB GR IE IT LI LU MC NL PT SE TR**

(30) Priority: **28.11.2000 US 724001**
**20.07.2001 US 306843 P**
**23.07.2001 US 307297 P**
**03.08.2001 US 310172 P**
**12.10.2001 US 977107**
**25.10.2001 US 53840**

(43) Date of publication of application:
**17.03.2004 Bulletin 2004/12**

(73) Proprietor: **3SAE Technologies, Inc.**
**Woburn, MA 01801 (US)**

(72) Inventors:
• **VETRANO, Carmine, J.**
**Medford, MA 02155 (US)**

• **WILEY, Robert G.**
**Frankfurt - KY 40601 (US)**

(74) Representative: **Feldkamp, Rainer et al**
**Patentanwälte**
**Wallach, Koch, Dr. Haibach, Feldkamp,**
**Garmischer Strasse 4**
**80339 München (DE)**

(56) References cited:
**EP-A- 0 125 890       EP-A- 0 715 193**
**US-A- 1 949 658       US-A- 3 737 626**
**US-A- 4 725 715       US-A- 5 054 106**
**US-A- 5 214 740       US-A- 5 939 136**
**US-A- 6 134 387       US-A1- 2002 084 066**
**US-B1- 6 402 856**

**Description**

**Cross-Reference to Related Applications**

This application claims benefit of priority from U.S. Application Serial No. 09/724,001, filed on November 28, 2000, entitled "Method For Stripping Fiber Optic Cable Without The Use Of Chemicals, While Preserving Near Virgin Strength," and claims benefit of priority from U.S. Provisional Application Serial No. 60/306,843, filed on July 20, 2001, entitled "High Efficiency Heater," U.S. Provisional Application Serial No. 60/307,297, filed on July 23, 2001, entitled "High Efficiency Heater," U.S. Provisional Application Serial No. 60/310,172, filed on August 3, 2001, entitled "High Efficiency Heater," U.S. Application Serial No. 09/977,107, filed on October 12, 2001, entitled "Method And System For Stripping An Optical Fiber," and U.S. Application Serial No. _____, filed on October 25, 2001, entitled "High Efficiency Heater," all of which are commonly owned by the assignee of the present application.

**Background**

Fiber optic cables are widely used in modem optical devices and optical communications systems. Optical fibers are usually coated with a protective layer, for example a polymer coating, in order to protect the surface of the fiber from chemical or mechanical damage. It is necessary to remove the protective coating in order to prepare the fibers to be cleaved and spliced, or in order to further process the fibers to manufacture optical devices such as optical sensors and other optical communications network components.

Conventional stripping methods include mechanical stripping, chemical stripping, and thermal stripping. These methods all suffer from a number of defects. Mechanical stripping typically involves a stripping tool, similar to a wire stripper, which cuts through the coating and scrapes it off. A major disadvantage is that mechanical stripping typically nicks or scratches the glass fiber surface, eventually leading to cracks and to a degradation in the tensile strength of the fiber. By way of example, the tensile strength of an optical fiber may be reduced from about 15-16 pounds before mechanical stripping to about 3-5 pounds after mechanical stripping. The optical fiber's longevity is thereby reduced.

Chemical stripping uses solvents or concentrated acids to remove the polymer coating. In the prior art, acid stripping is often performed using a sulfuric nitric mixture that includes about 95% sulfuric acid and about 5% nitric acid. While this prior art method reduces tensile strength degradation, an acid residue may typically be left on the fiber surface at the splice point. Therefore, using chemical stripping on titanium dioxide color coded fiber degrades the splice strength. Also, chemical stripping as performed in the prior art is very costly. Finally, there are major safety concerns inherent in chemical stripping methods. Ventilation and safety equipment may be needed when using acids for the stripping process. Human operators performing acid stripping require facilities having well-ventilated areas, preferably with exhaust or ventilation hoods for removing acid fumes. They may also require protective gear, such as protective clothing and gloves for avoiding acid burns, and protective breathing apparatus for protection from acid fumes in the air. Storing, handling, and transporting the acids are also extremely hazardous.

Thermal stripping processes use heat to remove the coating. In particular, hot air stripping methods have been used in the prior art, in which heat is applied to the polymer coating, causing the polymer coating to heat to a break temperature, expand, burst, and detach itself from the underlying optical fiber. Prior art hot air stripping methods, such as disclosed for example in U.S. Patent No. 5,968,283, involve translation of the fiber optical cable. The fiber optical cable is moved over the heat source so that heat is applied along the optical fiber cable between selected points, causing the corresponding polymer coating to curl and drop off the optical fiber. One prior art method applies a 470 degree hot air starting at one point on the fiber optic cable, and then moves the heat along the fiber, causing the polymer coating to curl.

These hot air stripping methods suffer from a number of disadvantages. The use of translation of the fiber optical cable is costly and inefficient. Also, polymer coating curls can remain attached to the fiber optical cable. To prevent the polymer coatings from remaining attached to the optical fiber, it may be necessary to split the polymer coating from the optical fiber at two points, before attempting to curl a section of the polymer coating off the optical fiber. Finally, these prior art methods may expose the air stream to carbon or oxidizing metals from the heat source, so that particles of carbon or oxidizing metals are deposited on the fiber. When such unwanted particles are deposited on the fiber, the tensile strength of the fiber may be reduced over time.

Another disadvantage of methods such as the method disclosed in U.S. Pat. No. 5,968,283 is that these methods use a hot air heat source that must generate heat at the break temperature, before starting to heat the polymer coating. This usually requires a flow of hot air for a period of time, before each stripping process begins. Devices such as heat shrink guns rated at 1500 Watts, which generate forced air at a temperature of about 470 degrees Celsius, are thus used as the heat source in these prior art methods. When splicing cycles are repeated, the flow of very hot air may be continuous. A continuous flow of very hot air can make it extremely hot and dangerous for the operator.

EP 0 715 193 A1 discloses a method and apparatus for stripping coatings from optical fibers wherein an inert gas is supplied from a source through a filter and a flow meter through a tube heater to provide a hot gas jet which may be directed to the coated optical fiber. The air is first heated up to the required temperature at a time at which the gas jet is not directed onto the fiber. After reaching the required temperature, the tube heater is rotated about an axis perpendicular to its longitudinal extension to be directed onto the fiber, and at the same time the tube heater is moved along the axis of the fiber to remove a sufficient length of the coating. To enhance the removal of the coating, a suction tube may be disposed on the side opposite to the gas jet. This method and apparatus uses a continuous hot gas stream which is directed, as indicated, on the fiber only after reaching a sufficient temperature for removal of the coating.

US-A-5 054 106 is directed to a soldering system which utilizes a fine jet of very hot gas for heating a work point wherein the hot air either impinges directly onto the work point or may heat a soldering tip. A foot switch may be used for activating or deactivating the fine jet which is quite soft to avoid blowing away the molten solder or the work pieces so that this apparatus would not be useful for stripping the coatings from fiber optical cables.

US-A-1 949 658 discloses embodiments of an air heating gun. In a first embodiment, air under the control of manually operated valve means enters into one end of a centrally disposed air chamber surrounded by an cylindrical electrical heater element, which in turn is surrounded by a sinuously formed air conducting tube having a first end connected to the other end of the air chamber, and a second end connected to a hot air exit nozzle. The valve is simultaneously actuated with an electrical switch for supplying the heater element In a second embodiment, the heater element is surrounded by a helically wound air conducting tube connected at its first end to valve means and at its second end to the hot air nozzle. The electrical switch for supplying the heater element is operable independently from the valve means, such that only the relatively small air volume within the air conducting tube may be heated before opening the valve means.

For the foregoing reasons, there is a need for a method and apparatus for stripping fiber optical cable that do not suffer from the disadvantages described above.

More generally, there is a need for a method and apparatus for heating substances including, but not limited to, air, gases, and fluids, more rapidly and efficiently, and without bringing undesirable contaminating particles into contact with the substances being heated. Areas in which such high efficiency heaters are particularly useful include, but are not limited to, materials, processing.

## Summary of the Invention

The present invention provides a system and method for heat stripping an optical fiber as defined in claims 1 and 25. A short, heated burst of air is injected from a forced air heat source, and applied along the stripping length of the optical fiber. The burst of air lasts less than one second, and has a temperature of about 700-1100 degrees C. The outer coating of the optical fiber vaporizes very rapidly, without requiring any motion of the fiber or the heat source. The outer coating of the optical fiber is removed without degrading the original tensile strength of the fiber. No coating residue remains on the fiber, and no curling of the coating occurs. While heated air is used in a preferred embodiment of the invention, other embodiments my use other substances, such as other gases and fluids.

A system for stripping an optical fiber in accordance with the present invention includes a source of air, and means for generating short bursts or streams of air from the air source, by releasing compressed air from the air source during short periods of time. Typically, each air stream lasts less than one second. In one embodiment of the invention, the means for generating air streams includes an air pressure generator for creating air pressure, an air pressure controller for controlling air pressure, and an air flow regulator for regulating the flow of air out of the air source so as to controllably release compressed air form the air source during very short time intervals. In one form of the invention, the air flow regulator may be a solenoid valve controlled by a timer circuit.

The optical fiber stripping system further includes a heater for heating the short air streams to a temperature sufficient to remove the outer coating from the optical fiber. Typically, the requisite temperature is from about 700 degrees Celsius to about 1100 degrees Celsius. The heater heats the air streams without bringing the air streams into contact with the heat source in the heater. In this way, the air streams avoid exposure to unwanted contaminating particles from the heat source, such as carbon or oxidized particles. The unwanted particles are thus prevented from depositing themselves on the fiber, and from reducing the tensile strength of the fiber over time. The heater can be used to efficiently heat substances other than air, such as other gases and fluids.

The heater includes a heater core having a heat generating element. The heater core encloses an inner heat chamber. A spiral-shaped air conduit surrounds the outer surface of the heater core, and is in communication with the heat chamber. When an air stream is injected from the air source into the air conduit, heat generated by the heat generating element in the heater core is transferred to the air stream while the air stream flows through the conduit and through the heat chamber. In this way, the air stream is heated to a temperature sufficient to strip an optical fiber, while remaining isolated from the heat generating element in the heater core. An air outlet nozzle connected to an outlet port of the heat chamber directs the heated burst of air along the stripping length of an optical fiber. The outer coating of the fiber is vaporized and removed almost instantly.

The present invention features a method for stripping an optical fiber as defined in claim 25. The method includes generating a plurality of air streams, each characterized by a relatively short duration in time. The air streams are injected into a heater having a heat generating element. The air streams are heated to a temperature sufficient to vaporize the outer coating from the fiber, without being exposed to the heat generating element. A single air stream is directed along the entire stripping length of an optical fiber, so as to thermally remove the outer coating from the optical fiber within less than one second.

**Brief Description of the Drawings**

The invention can be more fully understood by referring to the following detailed description taken in conjunction with the accompanying drawings, in which:

Figure 1 provides a schematic block diagram of a system for stripping an optical fiber, constructed in accordance with the present invention.
Figure 2 provides an overall plan view of a heater constructed in accordance with the present invention.
Figure 3 (a) provides a side view of the inner heat chamber.
Figure 3 (b) provides a top view of the inner heat chamber.
Figure 4 (a) provides a side view of the spiral-shaped air conduit that surrounds the heater core.
Figure 4 (b) provides a top view of the spiral-shaped conduit.
Figure 5 (a) provides a top view of a heater core, constructed in accordance with a preferred embodiment of the present invention.
Figure 5 (b) provides a side view of a heater core, constructed in accordance with a preferred embodiment of the present invention.
Figure 6 provides a cross-sectional view of a heater core, constructed in accordance with another embodiment of the present invention.

**Detailed Description**

The present invention provides a system and method for ultra-fast stripping of the outer coating from an optical fiber, without using chemicals and without reducing the original tensile strength of the fiber. The heating efficiency is significantly improved, as compared to the prior art.

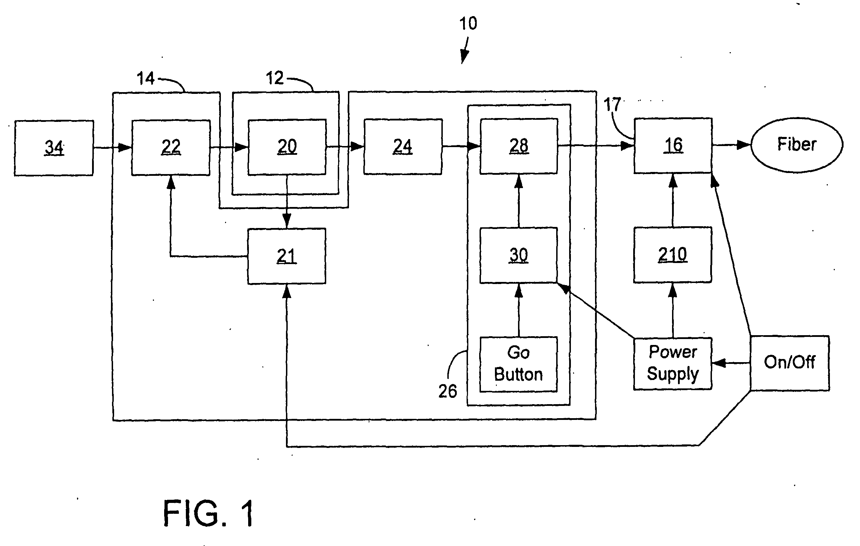

Figure 1 provides a schematic block diagram of a system 10 for stripping a fiber optic cable, constructed in accordance with one embodiment of the present invention. In overview, the system 10 includes a source of air 12, and means 14 for generating very short bursts of air, or air streams, from the air source. While air is used in the embodiment illustrated in Fig. 1, other substances can be used, including but not limited to gases and fluids. The system further includes a heater 16 for rapidly heating the bursts of air from the air source to a temperature sufficient to remove the outer coating from an optical fiber. The heater 16 can be used to heat substances other than air, such as other gases and fluids.
In one embodiment of the invention, the air source 12 is a pressure vessel 20 that contains air. Preferably, an air filter 34 is used to filter the air before the air enters the pressure vessel 20. In this way, the air source 12 provides air that is free of contaminants, such as oil or oxidized particles. A desiccant may also be added to the air.
In one embodiment, the means 14 for generating short air streams includes a pressure pump 22, an air pressure controller 24, and an air flow regulator 26. The pressure pump 22 creates a pressure buildup in the pressure vessel 20. The air pressure controller 24 controls the air pressure created by the pressure pump 22 within the vessel 20, and also controls the air pressure that leaves the pressure vessel 20. A pressure switch 21 can be used with the pressure pump 22, in order to limit and maintain the pressure in the pressure vessel 20.
The air flow regulator 26 is responsive to the air pressure controller 24, and regulates the flow of compressed air out of the air source, so as to release compressed air at desired times to create short bursts of air. The air flow regulator 26 may include a solenoid valve 28, which can be used to release the air pressure form the pressure vessel 20 for very short time intervals, creating the burst effect An adjustable timer circuit 30, preferably including an embedded microprocessor, can be used to control the on/off switching of the solenoid valve, and thereby control the duration of the burst. The burst of air released from the pressure vessel 20 is injected into an input port 17 of the heater 16. A power supply can be provided to supply power for the heater and the timer circuit, and an on/off switch may regulate the heater 16, the pressure controller 24, and the pressure regulator 26.

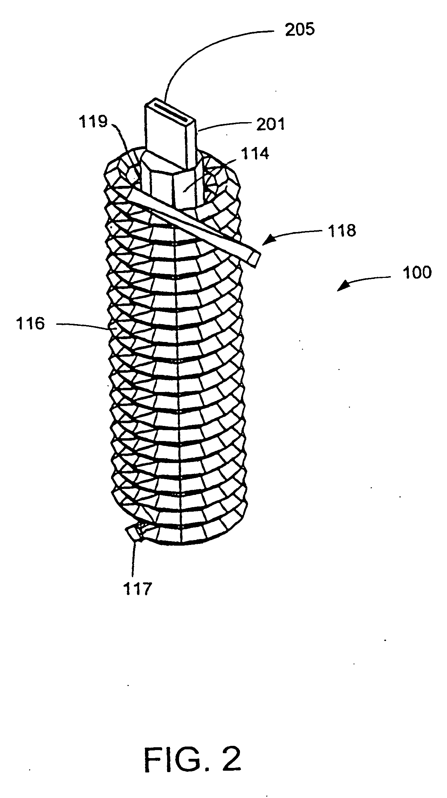

Figure 2 provides an overall plan view of a heater 100 constructed in accordance with one embodiment of the present invention. In a preferred embodiment, the heater 100 is a process air heater that can achieve the extremely high air temperatures required to strip optical fiber, typically between about 700 degrees Celsius to about 1100 degrees Celsius. The heater 100 provides a unique combination of low cost, high efficiency, small size, purity, and maximum temperature. The heater 100 is designed so as to enclose most of the heat within an inner heat chamber 114, until

4

heated air is released from an outlet port of the heat chamber 114. Preferably, the heater 100 has less than 10 minutes of ramp time, from room temperature to the desired temperature. The heater 100 is capable of achieving and maintaining air temperatures in excess of 1050 degrees Celsius, for long periods of time. The power requirement for the heater 100 is preferably a maximum of about 500 watts, at 120 volts AC. In the illustrated embodiment, the heater 100 is about 10 inches long, and 4 inches in diameter.

Effective stripping of optical fiber requires that the process air heater 100 not introduce contamination of any kind in to the air stream. If introduced into the air stream, the contaminating particles would deposit themselves onto the optical fiber, when the heated air streams are applied to the stripping length of the optical fiber. This would eventually lead to degradation of the splice strength of the fiber.

In the present invention, the heater 100 utilizes a heat exchanger. The heat exchanger enables the heater to heat the bursts of air to the desired high temperatures, while preventing exposure of the air to any unwanted particles from the heat generating element in the heater, such as oxidized metal particles or carbon. The heat exchanger is designed to maximize convection, conduction, and radiation. The use of a heat exchanger, together with the air filter 34 described in conjunction with Figure 1, prevents oxidized or otherwise contaminated heater particles from coming into contact with the fiber. This is one of the reasons why the method and system of the present invention yield substantially higher and more consistent tensile strength of the stripped fiber, as compared to prior art methods.

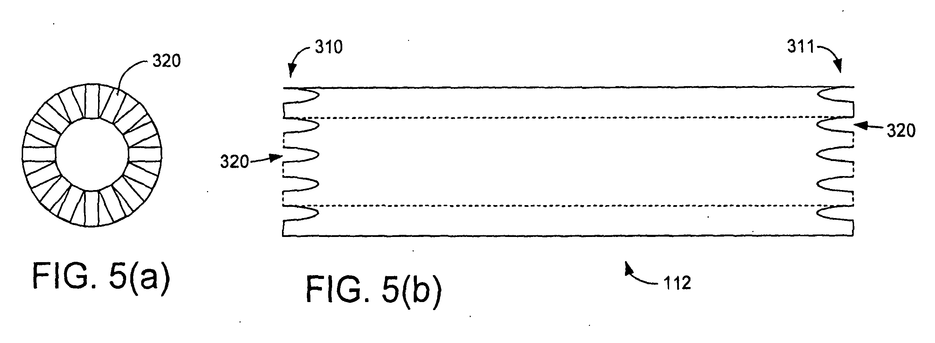

In a preferred embodiment, the heat exchanger includes a heater core 112 (further illustrated in Fig. 5), an inner heat chamber 114, and an air conduit 116 surrounding the heater core 112. In one embodiment, the heater core 112 may be a replaceable component of the heater 100. By using a replaceable heater core, the cost and frequency of replacing a burned out heater can be minimized, and the heater can have a lifespan of at least 5000+ hours. The heater core 112 preferably has a cylindrical shell structure, and includes a heat generating element 113. In a preferred embodiment, the heat generating element 113 is a conductive filament, such as a heater wire, that generates heat when an electrical potential is applied across the filament. The heat chamber 114 is disposed within the heater core 112.

The air conduit 116 is preferably spiral-shaped, and encircles the outer surface of the heater core 112. A gap or void region 119 is thus formed between the inner chamber 114 and the outer spiral conduit 116. The gap region 119 is also shaped as a cylindrical shell, and is sized so as to allow the heater core 112 to be easily press-fit into the gap region. In a configuration in which a replaceable heater core is used, the gap region 119 allows the replaceable heater core to be easily inserted therein and removed therefrom.

The air conduit 116 communicates with the heat chamber 114 at one end 117 of the conduit 116. The conduit 116 includes an input end 118 into which bursts of air from the air source 12 are injected, for example using an air injection nozzle. Upon injection of an air stream into the air conduit 116, heat from the heat generating element 113 in the heater core 112 is transferred to the injected air while the air flows through the air conduit 116 and into the heat chamber 114. In this way, the air stream is heated to the high temperatures necessary for stripping fiber optic cable, while avoiding any contact with the heat generating element 113 and the heater core 112.

The heat chamber 114 serves to enclose within the chamber most of the heat generated by the heat generating element 113 in the heater core 112, until a heated air stream is released from the chamber. An air outlet nozzle 205, connected to the outlet port 201, is used to direct a heated air stream from the heat chamber 114 to the optical fiber to be stripped. In contrast to prior art methods, in which a continuous flow of hot air is generated in order to strip an optical fiber, in the present invention the heat is enclosed in the chamber 114, until a single, short burst of hot air is generated at approximately 700 to 1100 degrees C. The heated air stream is directed along the length of the fiber coating to be stripped, and lasts less than 1 second. The entire polymer coating to be stripped is vaporized almost instantly. Also, there is no ramp up time or flow of hot air between cycles.

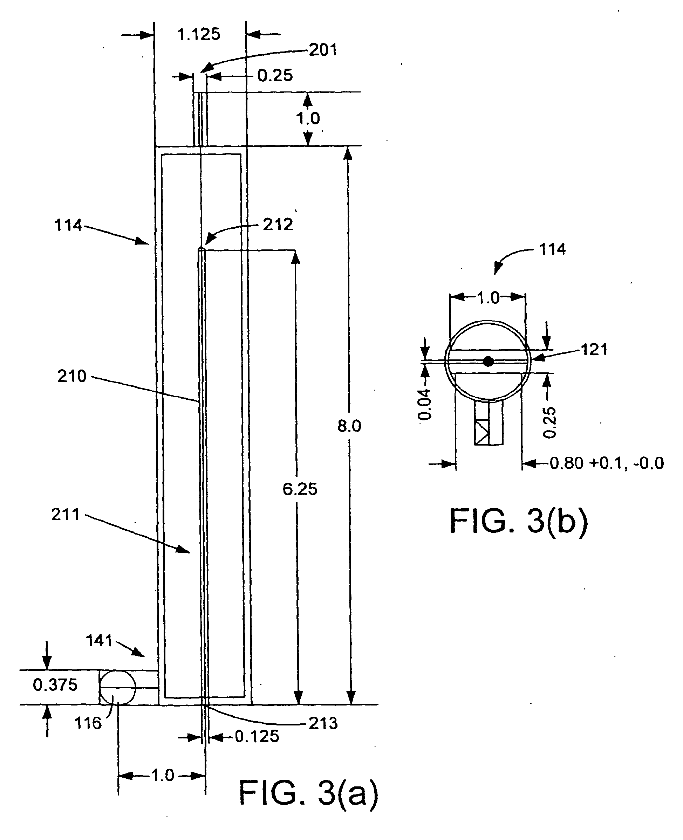

Figure 3(a) provides a side view of one embodiment of the inner heat chamber 114. In the illustrated embodiment, the heat chamber 114 has an outer diameter of about 1.125 inches, and a length of about 8.0 inches. The heat chamber 114 includes an outlet port 201 for allowing the heated air stream to exit from the chamber 114. The heat chamber 114 is preferably welded to the air conduit 116 at a bottom end 141 of the chamber 114. The heat chamber 114 causes the air flowing through the heater to slow down, compared to the rate at which the air flowed through the air conduit 116. This allows more heat to be absorbed into the process air.

In a preferred embodiment, the heat chamber 114 encloses a temperature controller 210, which provides measurement and feedback control of the temperature inside the heat chamber 114. Preferably, the temperature controller is a thermocouple 210 that is inserted into a small-diameter capillary tube 211. The small diameter tube 211 is closed at a first end 212, and is open at a second end 213 in order to allow for insertion of the thermocouple. The thermocouple 210 allows accurate measurement of the process air temperature, without adding contamination during the measurement process.

Figure 3 (b) illustrates the dimensions of the heat chamber 114, as viewed from the top. In the illustrated embodiment, the inner diameter of the heat chamber 114 is about 1.0". The hot air output nozzle 121 is shown as having a diameter of about 0.25".

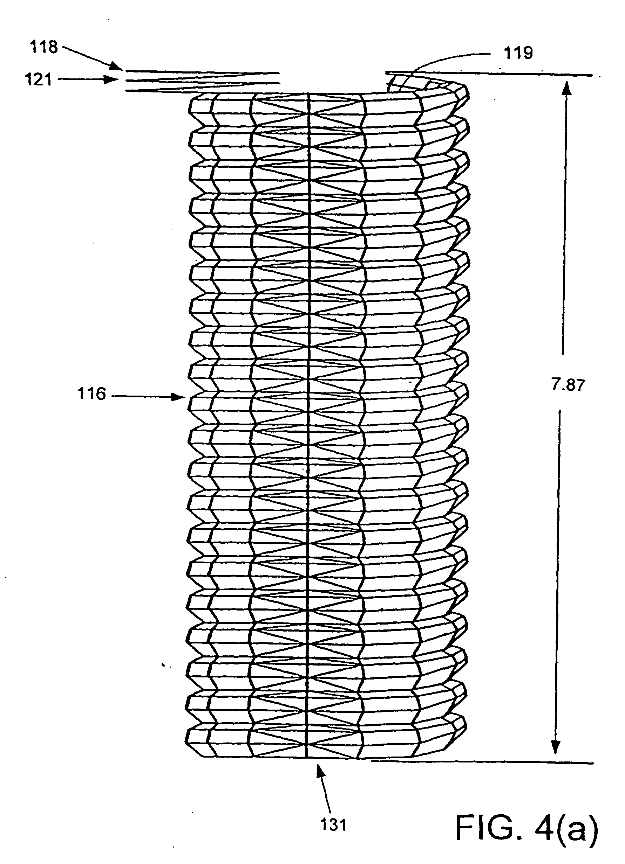

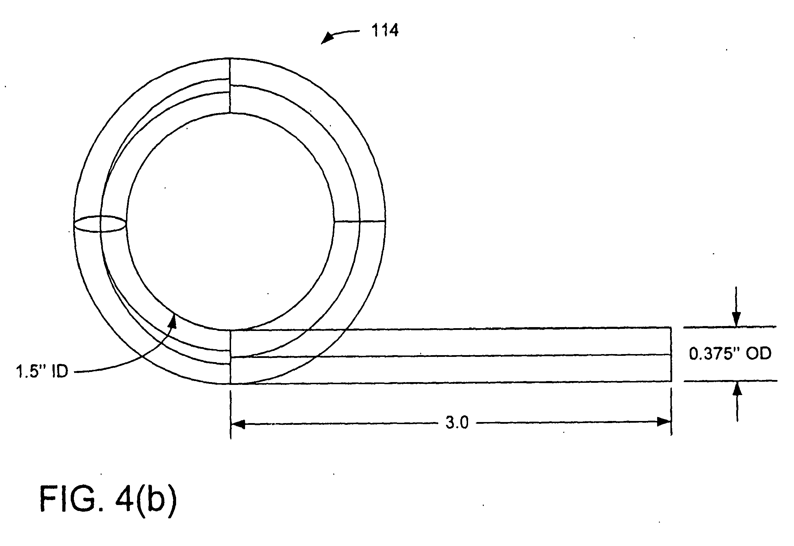

Figure 4 (a) provides a side view of one embodiment of the spiral-shaped air conduit that surrounds the heater core. The spiral shaped conduit 116 is also preferably made of quartz. Preferably, the spiral-shaped air conduit 116 forms a helical coil defining a plurality of turns. The outer surface of the heat chamber 114 and the inner surface of the helical coil define the gap region 119, which is shaped as a tube-shell so as to allow the heater core 112 to be press fit into the gap region 119. The spiral-shaped conduit 116 includes an input end 118 and an opposite end 131. An air input nozzle 121 is connected to the input end 118, and serves to inject air streams from the air source 12 (shown in Fig. 1) into the conduit 116. As described earlier, the conduit 116 is welded to the heat chamber 114 at the opposite end 131, allowing air from the air conduit 116 to enter the heat chamber 114. The heated air stream exits the chamber 114 from the air output nozzle, shown as being coupled to the outlet port of the chamber 114.

Figure 4 (b) illustrates the dimensions of the air conduit 116, as viewed from the top. In the illustrated embodiment, the outer spiral conduit 116 has an inner diameter of 1.5 inches. The difference between the inner diameter and the outer diameter of the spiral conduit 116 is about 0.375 inches, as shown. As described in reference to Figure 3 (b), the inner chamber 114 has an outer diameter of 1.125 inches. The thickness of the shell-shaped gap region 119 formed between the inner chamber and the outer spiral is thus given by:

$$(1.5 - 1.125)/2 \ = 0.1875 \text{ inches.}$$

Figures 5 (a) and 5 (b) illustrate a heater core 112, constructed in accordance with a preferred embodiment of the present invention. Figure 5 (a) provides a top view (not shown to scale) of the heater core 112, whereas Figure 5 (b) provides a side view (both views not shown to scale). In the illustrated preferred embodiment, the heater core 112 has a cylindrical, tubular configuration, and is made of quartz. The heater core 112 preferably has a wall thickness of about 1/6 inches, and an overall length of about 7 inches.

The inner and outer diameters of the heater core 112 are sized so as to fit into the gap region 119 described above. As described with reference to Fig. 4(b), the size of the gap region 119 between the chamber 114 and the conduit 116 is (1.5- 1.125) /2 = 0.1875 inches = 4.7625 mm. The total space which needs to be shared by the outer diameter and the inner diameter of the heater core 112 is therefore given by the difference between the size of the gap 119 and the maximum diameter of the quartz tube 300:

$$4.7625 \text{ mm} - 3 \text{ mm} = 1.7625 \text{ mm} = 0.035 \text{ inches.}$$

The maximum outer diameter of the heater core 112 is given by the difference between the inner diameter of the spiral conduit 116 and one half of the space shared by the outer and inner diameter of the heater core 112, i.e.:

$$OD_{max} \text{ (heater core)} = 1.5 \text{in} - 0.035 \text{ in} = 1.465 \text{ inches.}$$

The minimum inner diameter of the heater core 112 is given by the sum of the outer diameter of the inner chamber 114 and one half of the space shared by the outer and inner diameters of the heater core:

$$ID_{min} \text{ (heater core)} = 1.125 \text{ inner chamber OD} + 0.035 \text{in} = 1.16 \text{ inches.}$$

The heater core 112 includes a heat generating element 113. In a preferred embodiment, the heat generating element 113 may be a conductive filament, such as a heater wire, which generates heat upon application of an electrical potential across the filament, although other embodiments of the invention may use other types of heat generating elements. The heater core 112 preferably operates at a maximum of 500 watts, at 120 Volts. The current through the heat generating element 113 is therefore 500/120 = 4.17 Amps. The heater wire 113 should therefore has a resistance of about 120 / 4.17 = 28.8 Ohms. In the illustrated embodiment, a 22 gauge Kanthal A1 heater wire, having a length of about 21.5 feet and a diameter of 0.644, was used, although other embodiments of the invention may use other types of heater wires, such as Kanthal APM heater wire. The Kanthal A1 22 gauge wire has a resistance of 1.36 Ohms per foot.

The cylindrical heater core 112 has a first end 310 and a second end 311. A set of evenly spaced notches 320 are cut out at both ends 310 and 311 of the heater core 112. In the illustrated embodiment, each notch 320 is about 2 mm wide, and 4 mm deep. The Kanthal A1 22 gauge wire is wound inner diameter to outer diameter. The notches 320 are used to evenly space each wire space.

The 22 gauge Kanthal A1 heater wire 113 encircling the heater core 112 define conductive coils that surround the cylindrical shell structure. About 21 feet of heater wire 113 is used. The cylindrical heater core is preferably press fit into the gap 119 between the inner chamber 114 and the outer spiral conduit 116. Both ends of the heater wire 113 extend out to the back end of the heater 100. An outer case (not shown) may be provided for the heater 100, preferably made of steel and having an outer diameter of about 4 inches, and a length of about 9 inches. The heater wires 113 terminate at ceramic terminals that electrically isolate them from the outer case.

The conductive coils that surround the heater core 112 radiate heat energy, when a voltage is applied across the coils. The heat energy is radiated both radially inward, toward the heat chamber 114, and radially outward, toward the outer spiral conduit 116. In particular, the conductive coils define a heat flow path for the heat energy in a first direction radially inward of the coils toward the heat chamber 114, and in a second direction radially outward of the coils toward the spiral-shaped conduit 116, substantially opposite the first direction. Because heat is radiated in both directions, heating takes place both in the heat chamber 114 and in the conduit 116, increasing the efficiency of the heating process.

Preferably, the heater core 112 should not have glass to glass contact, either with the inner chamber 114 or with the outer spiral conduit 116. It is thus desirable that there be an inner and outer spacing around the heater core 112. For this purpose, high temperature buffer material, for example ceramic tape, may be placed at the top and bottom inner diameter and outer diameter of the heater core 112, to provide insulation. The ceramic tape can be placed over the weld points, at the top and bottom on the inner diameter and the outer diameter of the heater core 112. The tape may also be wrapped around the outer diameter of the heater core 112, and around the ends of the outer spiral conduit 116.

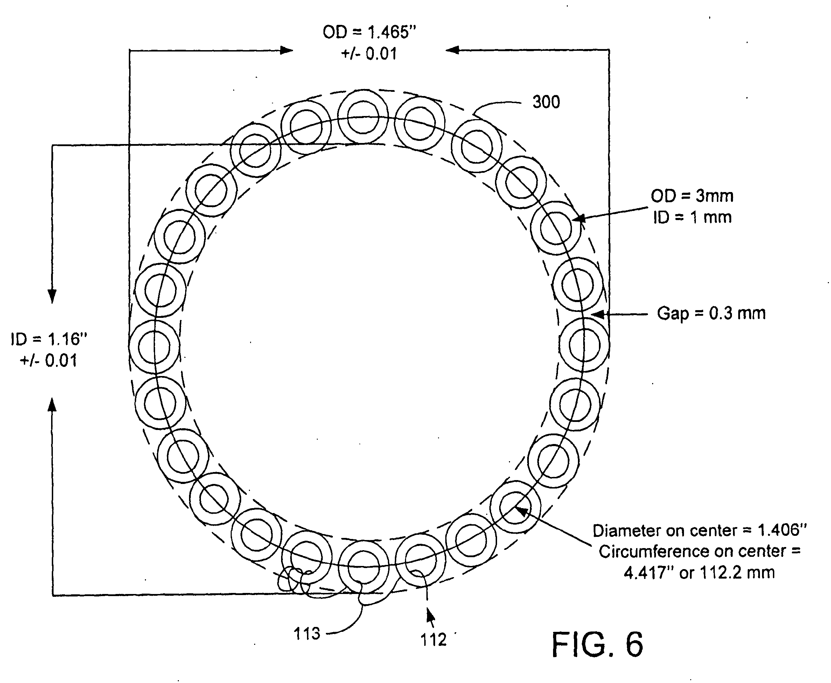

Figure 6 provides a cross-sectional view of another embodiment of the heater core 112. In this embodiment, the body of the heater core 112 is formed by welding together a plurality of quartz tubes 300, disposed side by side and spaced apart from each other in an annulus so as to form a cylindrical shell structure. In the illustrated exemplary embodiment of the invention, 34 quartz tubes, each having a length of about 7.5 inches, are welded together, 1 inch from both ends, to form a cylindrical shell structure. The tubes are spaced apart by about 0.3 mm, on average.

In the illustrated embodiment, the outer diameter of the quartz tubes 300 that are used to form the body of the heater core come in increments of 1 mm, i.e. the outer diameters of the tubes range may be 1mm, 2mm, 3mm, or larger. Since there must be room for the buffer material on the inner diameter and the outer diameter of the heater core, however, the diameter of the quartz tube is preferably not larger than 3mm. Since 34 tubes are used in the illustrated embodiment, each having a diameter of 3 mm, and with a 0.3mm gap between each tube, the circumference of the cylindrical heater core 112, as measured along the center of the constituent quartz tubes, is about 112.2mm.

In operation, the solenoid valve (shown in Fig. 1) is activated to generate a short burst of air, by releasing air pressure from the pressure vessel. The heater is activated by applying an electric potential through the heater wire 113, so that heat is generated by the wire. The burst of air is injected, using an air injection nozzle, into an input end of the outer spiral conduit 116 surrounding the heater core 112. The burst of air is rapidly heated as the air flows through the spiral conduit 116, and enters the heat chamber 114 which encloses the heat generated by the heater wire 113. The burst of air flows through the heat chamber 114, and exits from an outlet port of the heat chamber 114. An air outlet nozzle connected to the outlet port of the heat chamber 114 directs the heated burst of air at the outer coating of an optical fiber. The air outlet nozzle is preferably stationary, and relatively wide, so that heated air can be directed to the entire stripping length of the fiber, and no translation of the fiber or the heat source is required, nor is any motion of the nozzle required. The entire polymer coating on the outside of an optical fiber is vaporized and removed almost instantly.

The method and system of the present invention allows rapid and efficient stripping of optical fibers, without using chemicals. The virgin strength of the fiber is not degraded, since no mechanical scratching of the fiber occurs, and the fiber is not exposed to any oxidized metal particles, carbon, or other contamination from the heat source. The method and system of the present invention can be used on titanium dioxide color coded fiber without degrading the splice strength. Virtually no coating residue is left on the fiber, and no curling of the polymer coating is caused, so that no interference is caused with the next step in optical fiber processing, such as splicing. No rinse step is therefore required, after the fiber has been stripped.

The heater disclosed in the present invention is a high efficiency heater that is useful in many applications, besides optical fiber splitting systems, in which it is desirable to prevent contaminating particles from coming into contact with the substance being heated. Such applications include, but are not limited to, materials processing systems.

While the invention has been particularly shown and described with reference to specific preferred embodiments, it should be understood by those skilled in the art that various changes in form and detail may be made therein without departing from the scope of the invention, as defined by the appended claims.

**Claims**

1. A system for stripping an optical fiber having an outer coating, the system including:

a) an air source (12);

b) a burst generator (14), in operative communication with said air source, for generating one or more bursts of air from said air source; and

c) a heater (16) for heating said one or more bursts to a predetermined temperature sufficient to vaporize the outer coating of the optical fiber, the heater including:

i) an elongate hollow heater core (112) including a heat generating element (113);

ii) means defining an isolated transport path (116) isolated from the heater core for receiving the one or more bursts from said air source, said isolated transport path comprising tubular conduit having a first end coupled to said air source, said conduit being wound around the outside of the heater core and leading to a broader diameter heat chamber (114) that extends along the inside of the heater core and has an outlet port; said heater core being configured to allow heat from said heat generating element to be transferred to said one or more bursts within said air stream transport path, wherein said one ore more burst is substantially heated to said predetermined temperature and remains isolated from said heater core; and

iii) an air output nozzle (205) coupled to said outlet port (201) and shaped to direct said heated one or more bursts onto said optical fiber to remove the outer coating from said optical fiber.

2. A system according to claim 1, wherein said predetermined temperature is from about 700 degrees C to about 1100 degrees C.

3. A system according to claim 1, wherein said one or more burst has a duration of less than about 1 second.

4. A system according to claim 1, wherein said transport path comprises quartz.

5. A system according to claim 1, wherein the burst generator comprises:

a) a pressure pump (22) for creating air pressure;

b) an air pressure controller (24) operatively coupled to the pressure pump for controlling the air pressure created by the pressure pump; and

c) an air flow regulator (26), in communication with the air pressure controller, for regulating the flow of air out of said air source so as to controllably release the one or more bursts.

6. A system according to claim 5, wherein said air flow regulator comprises a valve (28).

7. A system according to claim 6, wherein said air flow regulator further comprises a timer circuit (30) for controlling the time interval during which the valve (28) is turned on

8. A system according to claim 1, further comprising means (205) for directing the one or more heated bursts from an outlet port of said heater onto said optical fiber so as to bring the entire length of the optical fiber into contact with said one or more heated burst.

9. A system according to claim 8, wherein said predetermined time interval is less than about 1 sec.

10. A system according to claim 1, further comprising an air injection nozzle (121) connected to said air source for injecting the one or more bursts into said first end of said transport path.

11. A system according to claim 1, further comprising an air filter (34) for filtering air from said air source.

12. A system according to any of the claims 1-11, wherein said tubular conduit comprises quartz tubing.

13. A system according to any of the claims 1-11, wherein said conduit is has a substantially spiral-shaped portion.

14. A system according to claim 13, wherein said spiral-shaped portion substantially encases the heater core.

15. A system according to claim 13 or 14, wherein said heater core is removably disposed between the spiral-shaped portion and the heat chamber.

16. A system according to any of the preceding claims, wherein said heater has a substantially cylindrical shell structure

EP 1 397 630 B1

17. A system according to any of the claims 13 to 16, wherein said heater core is disposed to thermally couple to the spiral-shaped portion and the heat chamber.

18. A system according to any of the claims 12 to 17, wherein said heater core and said heat chamber each comprise quartz.

19. A system according to any of the preceding claims, wherein said heat generating element comprises a conductive filament configured to generate heat upon application of an electrical potential across the filament.

20. A heater according to claim 19, wherein said conductive filament is threaded around said heater core.

21. A system according to claim 19 or 20, wherein said conductive filament defines a heat flow path for said heat energy in a first direction radially inward toward said heat chamber and in a second direction radially outward toward a portion of the isolated transport path disposed between the air source and heat chamber.

22. A system according to any of the preceding claims, wherein the heater is **characterized by** a length of about 25,4 cm (10 inches) and a width of about 10,16 cm (4 inches).

23. A system according any of the preceding claims,
wherein said heater core comprises a plurality of tubular elements, each tubular element having a first end and an opposite end, each of said plurality of tubular elements being disposed side by side in an spaced-apart relationship along an annulus; and
wherein said tubular elements are welded to one another at locations in the vicinity of the first end and the opposite end of each tubular element thereby forming a sidewall of a cylindrical shell structure.

24. A system according to claim 23, wherein each of said plurality of tubular elements has an outer diameter of about 3 mm, and an inner diameter of about 1 mm, and wherein the spacing between adjacent tubular elements is about 0.3 mm.

25. A method of stripping an optical fiber having an outer coating, the method comprising:

a) generating one or more bursts from an air source;
b) providing a heater comprising:

i) an elongate hollow heater core (112) including a heat generating element (113);
ii) means defining an isolated transport path (116) isolated from the heater core for receiving the one or more bursts from said air source, said isolated transport path comprising tubular conduit having a first end coupled to said air source, said conduit being wound around the outside of the heater core and leading to a broader diameter heat chamber (114) that extends along the inside of the heater core and has an outlet port;

c) heating said heat chamber by generating heat from said heat generating element of said heater core;
d) supplying the one or more bursts from said air source to said heat chamber;
e) heating the one or more bursts within said heat chamber to a predetermined temperature sufficient to remove said outer coating from said optical fiber, while isolating said one or more bursts from said heater core; and
f) subsequently directing the one or more bursts onto the optical fiber so as to thermally remove the outer coating from said optical fiber

26. A method according to claim 25, wherein the step of generating one or more air stream bursts comprises:

a) creating air pressure within the air source; and
b) regulating air pressure within the air source and the flow of air from the air source so that air is released from the air source in predetermined time intervals.

27. A method according to claim 25 or 26, wherein said predetermined temperature is between about 700 degrees to about 1100 degrees.

28. A method according to claim any of the claims 25 to 27, wherein one or more air stream bursts have a duration of less than about 1 second.

9

**Patentansprüche**

1. System zum Abmanteln einer Lichtleitfaser, die einen Aussenmantel aufweist, wobei das System Folgendes einschließt:

a) eine Luft-Quelle (12);
b) einen Stoß-Generator (14) in Betriebsverbindung mit der Luft-Quelle zur Erzeugung eines oder mehrerer Luftstöße von der Luft-Quelle; und
c) eine Heizeinrichtung (16) zum Aufheizen des einen oder mehrerer Luftstöße auf eine Temperatur, die zum Verdampfen des Aussenmantels der Lichtleitfaser ausreicht, wobei die Heizeinrichtung Folgendes einschließt:

i) einen langgestreckten hohlen Heizkern (112), der ein Wärme erzeugendes Element (113) einschließt;
ii) Einrichtungen, die einen isolierten Transportpfad (116) bilden, der von dem Heizkern isoliert ist, um den einen oder die mehreren Luftstöße von der Luft-Quelle zu empfangen, wobei der isolierte Transportpfad eine rohrförmige Leitung umfasst, die ein erstes Ende aufweist, das mit der Luft-Quelle gekoppelt ist, wobei die Leitung um die Außenseite des Heizkerns herumgewickelt ist und zu einer einen größeren Durchmesser aufweisenden Heizkammer (114) führt, die sich entlang der Innenseite des Heizkerns erstreckt und einen Auslass-Anschluss aufweist; wobei der Heizkern so konfiguriert ist, das er es ermöglicht, dass Wärme von dem Wärme erzeugenden Element auf den einen oder die mehreren Luftstöße in dem Luftstrom-Transportpfad übertragen wird, wobei der eine oder die mehreren Luftstöße im Wesentlichen auf die vorgegebene Temperatur erhitzt werden und von dem Heizkern isoliert bleiben; und
iii) eine Luft-Ausgangsdüse (205), die mit dem Auslass-Anschluss (201) gekoppelt und so geformt ist, dass sie den oder die erhitzten einen oder mehreren Luftstöße auf die Lichtleitfaser lenkt, um den Aussenmantel von der Lichtleitfaser zu entfernen.

2. System nach Anspruch 1, bei dem die vorgegebene Temperatur zwischen ungefähr 700°C und ungefähr 1100°C liegt.

3. System nach Anspruch 1, bei dem der eine oder die mehreren Luftstöße eine Dauer von weniger als 1 Sekunde haben.

4. System nach Anspruch 1, bei dem der Transport-Pfad Quarz umfasst.

5. System nach Anspruch 1, bei der Stoß-Generator Folgendes umfasst:

a) eine Druckpumpe (22) zur Erzeugung eines Luftdruckes;
b) eine Luftdruck-Steuereinrichtung (24), die betriebsmäßig mit der Druckpumpe gekoppelt ist, um den von der Druckpumpe erzeugten Luftdruck zu steuern, und
c) eine Luftströmungs-Regeleinrichtung (26) in Verbindung mit der Luftdruck-Steuereinrichtung, um die Strömung der Luft aus der Luft-Quelle heraus zu regeln, so dass der eine oder die mehreren Luftstöße in steuerbarer Weise freigegeben werden.

6. System nach Anspruch 5, bei dem die Luftströmungs-Regeleinrichtung ein Ventil (28) umfasst.

7. System nach Anspruch 6, bei dem die Luftströmungs-Regeleinrichtung weiterhin eine Zeitgeber-Schaltung (30) zur Steuerung des Zeitintervalls umfasst, während dessen das Ventil (28) eingeschaltet wird.

8. System nach Anspruch 1, das weiterhin Einrichtungen (205) zum Lenken des einen oder der mehreren erhitzten Luftstöße von einem Auslass-Anschluss der Heizeinrichtung auf die Lichtleitfaser derart umfasst, dass die gesamte Länge der Lichtleitfaser in Kontakt mit dem einen oder den mehreren erhitzten Luftstößen gebracht wird.

9. System nach Anspruch 8, bei dem das vorgegebene Zeitintervall kleiner als ungefähr 1 Sekunde ist.

10. System nach Anspruch 1, das weiterhin eine Luft-Injektions-Düse (121) umfasst, die mit der Luft-Quelle verbunden ist, um den einen oder die mehreren Luftstöße in das erste Ende des Transportpfades zu injizieren.

11. System nach Anspruch 1, das weiterhin einen Luftfilter (34) zum Filtern von Luft von der Luft-Quelle umfasst.

**12.** System nach einem der Ansprüche 1-11, bei dem die rohrförmige Leitung ein Quarz-Rohr umfasst.

**13.** System nach einem der Ansprüche 1-11, bei dem die Leitung einen im Wesentlichen spiralförmigen Abschnitt aufweist.

**14.** System nach Anspruch 13, bei dem der spiralförmige Teil im Wesentlichen den Heizkern umgibt.

**15.** System nach Anspruch 13 oder 14, bei dem der Heizkern entfernbar zwischen dem spiralförmigen Teil und der Heizkammer angeordnet ist.

**16.** System nach einem der vorhergehenden Ansprüche, bei dem die Heizeinrichtung eine im Wesentlichen zylindrische Mantelstruktur hat.

**17.** System nach einem der Ansprüche 13 bis 16, bei dem der Heizkern so angeordnet ist, dass er thermisch mit dem spiralförmigen Teil der Heizkammer gekoppelt ist.

**18.** System nach einem der Ansprüche 12 bis 17, bei dem der Heizkern und die Heizkammer jeweils Quarz umfassen.

**19.** System nach einem der vorhergehenden Ansprüche, bei dem das Wärme erzeugende Element einen leitenden Heizdraht umfasst, der zur Erzeugung von Wärme bei Anlegen eines elektrischen Potentials längs des Heizdrahtes konfiguriert ist.

**20.** Heizeinrichtung nach Anspruch 19, bei dem der leitende Heizdraht um den Heizkern herum gewickelt ist.

**21.** System nach Anspruch 19 oder 20, bei dem der leitende Heizdraht einen Wärmeströmungs-Pfad für die Heizenergie in einer ersten Richtung radial nach innen in Richtung auf die Heizkammer und in einer zweiten Richtung radial nach außen in Richtung auf einen Teil des isolierten Transportpfades bildet, der zwischen der Luft-Quelle und der Heizkammer angeordnet ist.

**22.** System nach einem der vorhergehenden Ansprüche, bei die Heizeinrichtung durch eine Länge von ungefähr 25,4 cm (10 Zoll) und eine Breite von ungefähr 10,16 cm (4 Zoll) gekennzeichnet ist.

**23.** System nach einem der vorhergehenden Ansprüche,
bei dem der Heizkern eine Anzahl von rohrförmigen Elementen umfasst, wobei jedes rohrförmige Element ein erstes Ende und ein entgegengesetztes Ende aufweist, wobei jedes der Anzahl von rohrförmigen Elemente Seite an Seite mit Abstand voneinander entlang eines Ringes angeordnet ist; und
wobei die rohrförmigen Elemente miteinander an Stellen in der Nähe des ersten Endes und des entgegengesetzten Endes jedes rohrförmigen Elementes verschweißt sind, wodurch eine Seitenwand einer zylindrischen Mantelstruktur gebildet wird.

**24.** System nach Anspruch 23, bei dem jedes der Anzahl von rohrförmigen Elementen einen Außendurchmesser von ungefähr 3 mm und einen Innendurchmesser von ungefähr 1 mm hat, und bei dem der Abstand zwischen benachbarten rohrförmigen Elementen ungefähr 0,3 mm beträgt.

**25.** Verfahren zum Abmanteln einer Lichtleitfaser, die einen Außenmantel aufweist, wobei das Verfahren Folgendes umfasst:

a) Erzeugen von einem oder mehreren Luftstößen von einer Luft-Quelle;
b) Bereitstellen einer Heizeinrichtung, die Folgendes umfasst:

i) einen langgestreckten hohlen Heizkern (112), der ein ein Wärme erzeugendes Element (113) einschließt;
ii) Einrichtungen, die einen isolierten Transportpfad (116), der von dem Heizkern isoliert ist, zum Empfang des einen oder der mehreren Luftstöße von der Luft-Quelle bilden, wobei der isolierte Transportpfad eine rohrförmige Leitung mit einem ersten Ende umfasst, das mit der Luft-Quelle gekoppelt ist, wobei die Leitung um die Außenseite des Heizkernes herum gewickelt ist und zu einer einen größeren Durchmesser aufweisenden Heizkammer (114) führt, die sich entlang der Innenseite des Heizkerns erstreckt und einen Auslass-Anschluss aufweist;

c) Erwärmen der Heizkammer durch Erzeugen von Wärme von dem Wärme erzeugenden Element des Heizkerns;

d) Liefern von einem oder mehreren Luftstößen von der Luft-Quelle an die Heizkammer;

e) Erhitzen des einen oder der mehreren Luftstöße in der Heizkammer auf eine vorgegebene Temperatur, die ausreicht, um den Aussenmantel von der Lichtleitfaser zu entfernen, während der eine oder die mehreren Luftstöße von dem Heizkern isoliert werden; und

f) Nachfolgendes Lenken des einen oder der mehreren Luftstöße auf die Lichtleitfaser derart, dass der Aussenmantel thermisch von der Lichtleitfaser entfernt wird.

26. Verfahren nach Anspruch 25, bei der Schritt der Erzeugung des einen oder der mehreren Luftstöße Folgendes umfasst:

a) Erzeugen eines Luftdruckes in der Luft-Quelle; und

b) Regeln des Luftdruckes innerhalb der Luft-Quelle und der Strömung der Luft von der Luft-Quelle, so dass Luft aus der Luft-Quelle in vorgegebenen Zeitintervallen abgegeben wird.

27. Verfahren nach Anspruch 25 oder 26, bei dem die vorgegebene Temperatur zwischen ungefähr 700 und 1100° Grad liegt.

28. Verfahren nach einem der Ansprüche 25 bis 27, bei dem ein oder mehrere der Luftstrom-Stöße eine Dauer von weniger als ungefähr 1 Sekunde haben.

**Revendications**

1. Système pour dénuder une fibre optique ayant un revêtement extérieur, le système comprenant :

a) une source d'air (12) ;

b) un générateur de salves (14), en communication fonctionnelle avec ladite source d'air, pour générer une ou plusieurs salves d'air à partir de ladite source d'air ; et

c) un élément chauffant (16) pour chauffer lesdites une ou plusieurs salves à une température prédéterminée suffisante pour vaporiser le revêtement extérieur de la fibre optique, l'élément chauffant comprenant :

i) un noyau de chauffage creux allongé (112) comprenant un élément générateur de chaleur (113) ;

ii) des moyens définissant un parcours de transport isolé (116) isolé par rapport au noyau de chauffage pour recevoir les une ou plusieurs salves provenant de ladite source d'air, ledit parcours de transport isolé comprenant un conduit tubulaire ayant une première extrémité couplée à ladite source d'air, ledit conduit étant enroulé autour de l'extérieur du noyau de chauffage et conduisant à une chambre de chauffe de plus grand diamètre (114) qui s'étend le long de l'intérieur du noyau de chauffage et a un orifice de sortie ; ledit noyau de chauffage étant configuré pour permettre de transférer la chaleur dudit élément générateur de chaleur auxdites une ou plusieurs salves à l'intérieur dudit parcours de transport de flux, où lesdites une ou plusieurs salves sont sensiblement chauffées à ladite température prédéterminée et restent isolées dudit noyau de chauffage ; et

iii) une buse de sortie d'air (205) couplée au dit orifice de sortie (201) et profilée pour diriger lesdites une ou plusieurs salves chauffées sur ladite fibre optique pour éliminer ledit revêtement extérieur de ladite fibre optique.

2. Système selon la revendication 1, dans lequel ladite température prédéterminée est d'environ 700 degrés C à environ 1 100 degrés C.

3. Système selon la revendication 1, dans lequel lesdites une ou plusieurs salves ont une durée inférieure à environ 1 seconde.

4. Système selon la revendication 1, dans lequel ledit parcours de transport comprend du quartz.

5. Système selon la revendication 1, dans lequel le générateur de salves comprend :

a) une pompe de pression (22) pour créer une pression d'air ;

b) un régulateur de pression d'air (24) couplé fonctionnellement à la pompe de pression pour réguler la pression d'air créée par la pompe de pression ; et

c) un régulateur de débit d'air (26), en communication avec le régulateur de pression d'air, pour réguler le débit d'air sorti de ladite source d'air de manière à libérer de manière contrôlable les une ou plusieurs salves.

6. Système selon la revendication 5, dans lequel ledit régulateur de débit d'air comprend une vanne (28).

7. Système selon la revendication 6, dans lequel ledit régulateur de débit d'air comprend en outre un circuit temporisateur (30) pour contrôler l'intervalle de temps durant lequel la vanne (28) est activée.

8. Système selon la revendication 1, comprenant en outre des moyens (205) pour diriger les une ou plusieurs salves chauffées d'un orifice de sortie dudit élément chauffant sur ladite fibre optique de manière à amener toute la longueur de la fibre optique en contact avec lesdites une ou plusieurs salves chauffées.

9. Système selon la revendication 8, dans lequel ledit intervalle de temps est inférieur à environ 1 seconde.

10. Système selon la revendication 1, comprenant en outre une buse d'injection d'air (121) reliée à ladite source d'air pour injecter les une ou plusieurs salve dans ladite première extrémité dudit parcours de transport.

11. Système selon la revendication 1, comprenant en outre un filtre à air (34) pour filtrer l'air provenant de ladite source d'air.

12. Système selon l'une quelconque des revendications 1 à 11, dans lequel ledit conduit tubulaire comprend un tubage en quartz.

13. Système selon l'une quelconque des revendications 1 à 11, dans lequel ledit conduit a une portion sensiblement en forme de spirale.

14. Système selon la revendication 13, dans lequel ladite portion en forme de spirale enveloppe sensiblement le noyau de chauffage.

15. Système selon la revendication 13 ou 14, dans lequel ledit noyau de chauffage est disposé de manière amovible entre ladite portion en forme de spirale et la chambre de chauffe.

16. Système selon l'une quelconque des revendications précédentes, dans lequel ledit élément chauffant a une structure de coque sensiblement cylindrique.

17. Système selon l'une quelconque des revendications 13 à 16, dans lequel ledit noyau de chauffage est disposé pour s'accoupler thermiquement à la portion en forme de spirale et à la chambre de chauffe.

18. Système selon l'une quelconque des revendications 12 à 17, dans lequel ledit noyau de chauffage et ladite chambre de chauffe comprennent chacune du quartz.

19. Système selon l'une quelconque des revendications précédentes, dans lequel ledit élément générateur de chaleur comprend un filament conducteur configuré pour générer de la chaleur à l'application d'un potentiel électrique aux bornes du filament.

20. Système selon la revendication 19, dans lequel ledit filament conducteur est enroulé en spirale autour dudit noyau de chauffage.

21. Système selon la revendication 19 ou 20, dans lequel ledit filament conducteur définit un parcours de circulation de chaleur pour ladite énergie thermique dans une première direction radialement vers l'intérieur vers ladite chambre de chauffe et dans une deuxième direction radialement vers l'extérieur vers une portion du parcours de transport isolé disposé entre la source d'air et la chambre de chauffe.

22. Système selon l'une quelconque des revendications précédentes, dans lequel l'élément chauffant est **caractérisé par** une longueur d'environ 25,4 cm (10 pouces) et une largeur d'environ 10,16 cm (4 pouces).

**23.** Système selon l'une quelconque des revendications précédentes,
dans lequel ledit élément chauffant comprend une pluralité d'éléments tubulaires, chaque élément tubulaire ayant une première extrémité et une extrémité opposée, chacun de ladite pluralité d'éléments tubulaires étant disposé côte à côte dans une relation espacée suivant un anneau ; et
dans lequel lesdits éléments tubulaires sont soudés entre eux dans des emplacements à proximité de la première extrémité et de l'extrémité opposée de chaque élément tubulaire, en formant ainsi une paroi latérale d'une structure de coque cylindrique

**24.** Système selon la revendication 23, dans lequel chacun de ladite pluralité d'éléments tubulaires a un diamètre extérieur d'environ 3 mm et un diamètre intérieur d'environ 1 mm et dans lequel l'écartement entre des éléments tubulaires adjacents est d'environ 0,3 mm.

**25.** Procédé pour dénuder une fibre optique ayant un revêtement extérieur, le procédé comprenant :

a) la génération d'une ou plusieurs salves à partir d'une source d'air ;
b) la prédisposition d'un élément chauffant comprenant :

i) un noyau de chauffage creux allongé (112) comprenant un élément générateur de chaleur (113) ;
ii) des moyens définissant un parcours de transport isolé (116) isolé par rapport au noyau de chauffage pour recevoir les une ou plusieurs salves provenant de ladite source d'air, ledit parcours de transport isolé comprenant un conduit tubulaire ayant une première extrémité couplée à ladite source d'air, ledit conduit étant enroulé autour de l'extérieur du noyau de chauffage et conduisant à une chambre de chauffe de plus grand diamètre (114) qui s'étend le long de l'intérieur du noyau de chauffage et a un orifice de sortie ;

c) le chauffage de ladite chambre de chauffe en générant de la chaleur à partir dudit élément générateur de chaleur dudit noyau de chauffage;
d) la délivrance des une ou plusieurs salves de ladite source d'air à ladite chambre de chauffe ;
e) le chauffage des une ou plusieurs salves dans ladite chambre de chauffe à une température prédéterminée suffisante pour éliminer ledit revêtement extérieur de ladite fibre optique, tout en isolant lesdites une ou plusieurs salves dudit noyau de chauffage ; et
f) la direction ensuite des une ou plusieurs salves sur la fibre optique de manière à éliminer thermiquement ledit revêtement extérieur de ladite fibre optique.

**26.** Procédé selon la revendication 25, dans lequel l'étape de génération de salves de flux d'air comprend :

a) la création d'une pression d'air à l'intérieur de la source d'air ; et
b) la régulation de la pression d'air à l'intérieur de la source d'air et le débit d'air provenant de la source d'air de manière que l'air soit libéré de la source d'air dans des intervalles de temps prédéterminés.

**27.** Procédé selon la revendication 25 ou 26, dans lequel ladite température prédéterminée est d'environ 700 degrés C à environ 1 100 degrés C.

**28.** Procédé selon l'une quelconque des revendications 25 à 27, dans lequel une ou plusieurs salves de flux d'air ont une durée inférieure à environ 1 seconde.

FIG. 1

FIG. 2

1.125

201

0.25

1.0

114

212

210

8.0

211

6.25

141

0.375

116

213

0.125

1.0

FIG. 3(a)

114

1.0

121

0.04

0.25

0.80 +0.1, -0.0

FIG. 3(b)

FIG. 4(a)

FIG. 4(b)

EP 1 397 630 B1

FIG. 5(a)

FIG. 5(b)

EP 1 397 630 B1

FIG. 6

OD = 1.465"
+/- 0.01

300

OD = 3mm
ID = 1 mm

Gap = 0.3 mm

ID = 1.16"
+/- 0.01

Diameter on center = 1.406"
Circumference on center =
4.417" or 112.2 mm

113

112

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 724001 A
- US 306843 P
- US 307297 P
- US 310172 P
- US 977107 A
- US 5968283 A
- EP 0715193 A1
- US 5054106 A
- US 1949658 A